(19) **Europäisches Patentamt / European Patent Office / Office européen des brevets**

(11) **EP 4 635 748 A1**

(12) **EUROPEAN PATENT APPLICATION**

(43) Date of publication:
22.10.2025 Bulletin 2025/43

(21) Application number: 25170099.3

(22) Date of filing: 11.04.2025

(51) International Patent Classification (IPC):
$B60C\ 1/00^{(2006.01)}$　　　$C08L\ 9/00^{(2006.01)}$

(52) Cooperative Patent Classification (CPC):
(C-Sets available)
B60C 1/0016 　　　　　　　　　　　　　(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.04.2024 JP 2024067054

(71) Applicant: SUMITOMO RUBBER INDUSTRIES, LTD.
Kobe-shi, Hyogo 651-0072 (JP)

(72) Inventor: Suzuki, Yumi
Hyogo, 651-0072 (JP)

(74) Representative: Forresters IP LLP
Skygarden
Erika-Mann-Straße 11
80636 München (DE)

(54) **TIRE**

(57) Provided is a tire comprising a tire member composed of a rubber composition, the rubber composition comprising a rubber component, a filler, and a plasticizer, the rubber component comprising an isoprene-based rubber and a styrene-butadiene rubber, the isoprene-based rubber comprising an epoxidized isoprene-based rubber, wherein N/t is less than 2.2, where N represents a total content, in % by mass, of isoprene-based rubbers in the rubber component and t represents a thickness, in mm, of the tire member.

Processed by Luminess, 75001 PARIS (FR)

**(Cont. next page)**

EP 4 635 748 A1

(52) Cooperative Patent Classification (CPC): (Cont.)

C-Sets
**C08L 9/06, C08L 91/00, C08L 45/00, C08L 9/00,
C08L 15/00, C08L 91/06, C08K 3/04, C08K 3/36,
C08K 5/548, C08K 5/18, C08K 5/09, C08K 3/22,
C08K 3/06, C08K 5/47, C08K 5/31, C08K 5/40**

**Description**

TECHNICAL FIELD

The present invention relates to a tire.

BACKGROUND OF THE INVENTION

JP 2021-25006 A describes that a tire comprising a tread composed of a rubber composition that comprises an isoprene-based rubber and silica and has 20°C tan $\delta$ and -20°C tan $\delta$ within predetermined ranges has improved fuel efficiency, abrasion resistance, steering stability during high-speed running, and wet grip performance during high-speed running with a good balance.

SUMMARY OF THE INVENTION

When an isoprene-based rubber and a styrene-butadiene rubber are used in combination to improve grip performance, silica is easy to be unevenly distributed in a styrene-butadiene rubber phase, making it difficult to secure dispersibility of silica, and therefore there is room for improvement in each performance of a tire.
It is an object of the present invention to provide a tire that can improve in overall performance of steering stability during high-speed running and abrasion resistance.
The present invention relates to a tire comprising a tire member composed of a rubber composition, the rubber composition comprising a rubber component, a filler, and a plasticizer, the rubber component comprising an isoprene-based rubber and a styrene-butadiene rubber, the isoprene-based rubber comprising an epoxidized isoprene-based rubber, wherein N/t is less than 2.2, where N represents a total content, in % by mass, of isoprene-based rubbers in the rubber component and t represents a thickness, in mm, of the tire member.
According to the present invention, provided is a tire that can improve the overall performance of steering stability during high-speed running and abrasion resistance.

BRIEF DESCRIPTION OF THE DRAWINGS

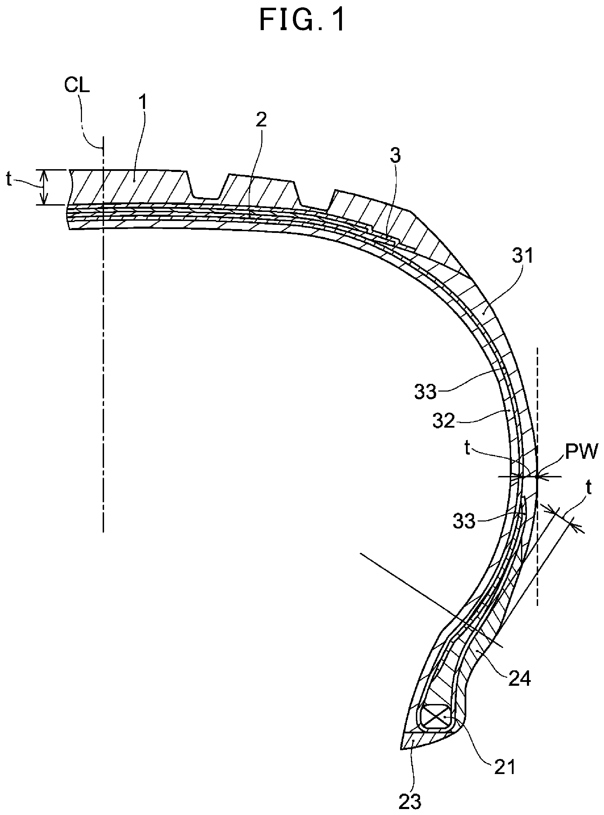

FIG. 1 is a schematic partial cross-sectional view of a tire relating to one embodiment of the present invention.

DETAILED DESCRIPTION

The tire that is one embodiment of the present invention is a tire comprising a tire member composed of a rubber composition, the rubber composition comprising a rubber component, a filler, and a plasticizer, the rubber component comprising an isoprene-based rubber and a styrene-butadiene rubber, the isoprene-based rubber comprising an epoxidized isoprene-based rubber, wherein N/t is less than 2.2, where N represents a total content, in % by mass, of isoprene-based rubbers in the rubber component and t represents a thickness, in mm, of the tire member.
Although it is not intended to be bound by a theory, for example, the following can be considered as a mechanism for improving the overall performance of steering stability during high-speed running and abrasion resistance, in the tire of the present invention.
(1) Since the epoxidized isoprene-based rubber interacts with silica, it can obtain a higher rigidity than a typical isoprene-based rubber, which is considered to contribute to improvement in steering stability.
Moreover, (2) since the epoxidized isoprene rubber and the styrene-butadiene rubber are partially compatible with each other, improvement in dispersibility of the filler can be expected, which is considered to contribute to improvement in abrasion resistance.
It is considered that, with cooperation of the above-described (1) and (2), a remarkable effect of improving steering stability during high-speed running and abrasion resistance is achieved.
The total content N of the isoprene-based rubbers in the rubber component is preferably greater than 5% by mass from the viewpoint of securing rigidity of the rubber composition.
The rubber component preferably comprises greater than 30% by mass of a styrene-butadiene rubber from the viewpoint of the effects of the present invention.
A total styrene amount in the rubber component is preferably less than 30% by mass from the viewpoint of the effects of the present invention.
The plasticizer preferably comprises a dicyclopentadiene-based resin. Since the dicyclopentadiene-based resin is highly compatible with an isoprene-based rubber and a styrene-butadiene rubber and is bulky, it is considered that a rubber composition using them in combination does not impair the reinforcing effect and is easily imparted with flexibility.

P/N is preferably greater than 2.0 from the viewpoint of the effects of the present invention, where P represents a total content, in parts by mass, of plasticizers based on 100 parts by mass of the rubber component.

X/S is preferably greater than 1.0 from the viewpoint of the effects of the present invention, where X represents a content, in parts by mass, of silica based on 100 parts by mass of the rubber component and S represents a content, in % by mass, of the styrene-butadiene rubber in the rubber component.

The silica is preferably silica made from a biomass material from the viewpoint of building a sustainable society.

The tire member is preferably at least one selected from the group consisting of a tread part, a sidewall, and a clinch, from the viewpoint that the effects of the present invention are exhibited well.

<Definitions>

A "tread part" is a member comprising a part that forms a ground-contacting surface of a tire, and in a case where the tire comprises a member that forms a tire skeleton from steel or a textile material such as a belt layer, a belt reinforcing layer, a carcass layer, and the like, on a cross section in a tire radial direction, a member arranged on an outer side therefrom in the tire radial direction.

A "standardized state" is a state where a tire is rim-assembled on a standardized rim and air under a standardized internal pressure is filled, and no load is applied.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity $W_L$" is calculated by the following equations. Wherein "V" is a virtual volume, in $mm^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt / 2)^2 - (Dt / 2 - Ht)^2\} \times \pi \times Wt$$

When the tire member is a tread part, a "thickness of the tread part" is a thickness of the tread part as measured along a normal line to a tread grounding surface on a tire equator in a cross section passing through a tire rotation axis. In a case where a circumferential groove is present on a tire equator, the thickness of the tread is a thickness measured along a normal line to a tread grounding surface on a central part in a tire width direction of a land part in which the central part in the tire width direction of the land part is closest to a tire equatorial plane, of land parts present on both lateral sides in a tire width direction of the groove.

When the tire member is a sidewall, a "thickness of the sidewall" is a thickness of the sidewall as measured along a normal line of a tire maximum width position PW on a cross section passing through a tire rotation axis, which is usually a distance, in mm, from the surface of the sidewall to a surface of a carcass cord. The "tire maximum width position PW" refers to the maximum width position within a cross section in a tire width direction measured in a standardized state.

When the tire member is a clinch, a "thickness of the clinch" is the maximum thickness of the clinch as measured along a line normal of a main body of a carcass.

In addition, when a tire member is formed of two or more rubber layers, a thickness of the tire member refers to a thickness of any one of the rubber layers forming the tire member, preferably a thickness of the rubber layer arranged on an outermost side in a tire axial direction (for example, a thickness of the rubber layer forming the tread surface, in a case of the tread part). A thickness of a rubber layer shall be measured along the normal line.

An "epoxidation rate" is a ratio, in mol%, of the number of epoxidized double bonds to the total number of double bonds in a rubber before epoxidized, which is measured using an NMR device (e.g., JNM-ECA series manufactured by JEOL Ltd.). Besides, the double bonds disappear upon epoxidation.

A "styrene content" is a value calculated by pyrolysis gas chromatography. Besides, in the present specification, "pyrolysis gas chromatography" refers to a method of heating a sample in a pyrolyzer, separating individual components contained in gas phase components generated by this heating using a separation column, and analyzing each separated component. The styrene content is applied to, for example, a rubber component having a repeating unit derived from styrene such as an SBR and the like (styrene unit).

A "vinyl content (1,2-bond butadiene unit amount)" is a value calculated by pyrolysis gas chromatography in the same manner as for the above-described styrene content, and is applied to, for example, a rubber component having a repeating unit derived from a butadiene, such as an SBR, a BR, and the like.

A "cis content (cis-1,4-bond butadiene unit amount)" is a value calculated by pyrolysis gas chromatography in the same manner as for the above-described styrene content, and is applied to, for example, a rubber component having a repeating unit derived from a butadiene, such as an SBR, a BR, and the like.

A "total styrene amount in a rubber component" is a total content, in % by mass, of styrene units contained in 100 % by mass of a rubber component, which is a value obtained by multiplying a styrene content, in % by mass, by a mass fraction in a rubber component to obtain a calculated value, for each of respective rubber components, and summing these values. Specifically, it is calculated by $\Sigma$(styrene content (% by mass) of each styrene unit-containing rubber $\times$ content (% by mass) of each styrene unit-containing rubber in rubber component / 100). For example, when the rubber component consists of 20% by mass of a first SBR (styrene content: 25% by mass), 30% by mass of a second SBR (styrene content: 27.5% by mass), and 50% by mass of a BR, a total styrene amount in the rubber component is about 13.3% by mass (= $(25\times20/100)+(27.5\times30/100)+(0\times10/100)$).

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered trademark) SuperMultiporeHZ-M manufactured by Tosoh Corporation). For example, it is applied to an SBR, a BR, a plasticizer, and the like.

A "nitrogen adsorption specific surface area ($N_2SA$) of carbon black" is measured according to JIS K 6217-2:2017.

A "nitrogen adsorption specific surface area ($N_2SA$) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of $\{4 \times (\text{area of particle})/\pi\}$) is calculated from the microscope image to be defined as a particle size.

A "softening point of a resin component" is a temperature at which a sphere drops when the softening point specified in JIS K 6220-1:2015 7.7 is measured with a ring and ball softening point measuring device.

A "plasticizer" is a material that imparts plasticity to a rubber component, which is a component extracted from a rubber composition using acetone. Moreover, the plasticizer includes a plasticizer that is liquid (in a liquid state) at 25°C and a plasticizer that is solid at 25°C. However, it shall not comprise wax and stearic acid commonly used in the tire industry.

A "total content P of a plasticizer" also includes an amount of a plasticizer contained in an extended rubber component previously extended with the plasticizer such as oil, a resin component, a liquid rubber component, and the like. The same applies to a content of oil, a content of a resin component, and a content of a liquid rubber, for example, an extending oil is included in the content of oil when an extending component is oil.

A procedure for producing a tire that is one embodiment of the present invention will be described in detail below. However, the following descriptions are illustrative for explaining the present invention, and are not intended to limit the technical scope of the present invention to this description range only.

<Tire>

FIG. 1 illustrate the tire that is one embodiment of the present invention, but the present invention is not limited thereto. FIG. 1 shows a part of a cross section of the tire perpendicular to a circumferential direction. In FIG. 1, a vertical direction is a tire radial direction, a horizontal direction is a tire axial direction, and a direction perpendicular to a paper surface is a tire circumferential direction.

The tire relating to the present embodiment comprises a tread part 1 extending in a circumferential direction to form an annular shape, a pair of sidewalls 31 arranged on both sides of the tread part, a clinch 24, a rim cushion 23, an inner liner 32, a pair of bead parts having a bead core 21, at least one layer of a carcass 33 moored to the bead core 21, at least one layer of a belt 2 arranged on the outer side of the carcass 33 in a tire radial direction, and a band 3 that reinforces the belt 2.

The tire relating to the present embodiment is a tire comprising a tire member composed of a rubber composition described below, characterized in that N/t is less than 2.2, where N represents a content, in % by mass, of the isoprene-based rubber in the rubber component and t represents a thickness, in mm, of the tire member.

The tire member in which the rubber composition is used is preferably at least one selected from the group consisting of a tread part, a sidewall, and a clinch, more preferably a tread part, from the viewpoint that the effects of the present invention are exhibited well.

The thickness t of the tire member is preferably 2.0 mm or more, more preferably 3.0 mm or more, further preferably 4.0 mm or more, particularly preferably 5.0 mm or more, from the viewpoint of the effects of the present invention. Moreover, t is preferably 12.0 mm or less, more preferably 11.0 mm or less, further preferably 10.0 mm or less, particularly preferably 9.0 mm or less, from the viewpoint of the effects of the present invention.

(N/t)

N/t is less than 2.2, preferably less than 2.1, more preferably less than 2.0, further preferably less than 1.9. On the other hand, a lower limit value of N/t is, but not particularly limited to, preferably greater than 0.5, more preferably greater than 0.7, further preferably greater than 0.9, further preferably greater than 1.1, particularly preferably greater than 1.3.

[Rubber composition]

The rubber composition constituting the tire member relating to the present embodiment (hereinafter referred to as the rubber composition relating to the present embodiment) comprises a rubber component comprising an isoprene-based rubber and a styrene-butadiene rubber, a filler, and a plasticizer, any of which can be produced using raw materials described below. The rubber composition relating to the present embodiment will be described below.

<Rubber component>

The rubber component relating to the present embodiment comprises an isoprene-based rubber and a styrene-butadiene rubber (SBR) as essential components, and may further comprise other rubber components.

(Diene-based rubber)

As the rubber component, a diene-based rubber is appropriately used. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. Moreover, these diene-based rubbers may be modified rubbers treated with modifying groups capable of interacting with fillers such as carbon black, silica, and the like, or may be hydrogenated rubbers obtained by hydrogenating a part of an unsaturated bond. These diene-based rubbers may be used alone, or two or more thereof may be used in combination. Moreover, as the diene-based rubber, an extended rubber which has been previously extended with a plasticizer which will be mentioned later may be used.

A content of a diene-based rubber in the rubber component is preferably 70% by mass or more, more preferably 80% by mass or more, further preferably 90% by mass or more, particularly preferably 95% by mass or more. Moreover, the rubber component may be one consisting of a diene-based rubber.

The rubber component relating to the present embodiment comprises an isoprene-based rubber and a styrene-butadiene rubber (SBR) as essential components, and may further comprise a butadiene rubber (BR) and the like. Moreover, it may be a rubber component consisting of an isoprene-based rubber and an SBR, or may be a rubber component consisting of an isoprene-based rubber, an SBR, and a BR.

(Isoprene-based rubber)

The isoprene-based rubber relating to the present embodiment comprises an epoxidized isoprene-based rubber as an essential component, and may further comprise a non-epoxidized isoprene-based rubber. The isoprene-based rubber is not particularly limited, examples of which include, for example, a natural rubber, an isoprene rubber, and the like. These isoprene-based rubbers may be used alone, or two or more thereof may be used in combination.

The epoxidized isoprene-based rubber may be one obtained by epoxidizing a natural rubber (an epoxidized natural rubber) or one obtained by epoxidizing an isoprene rubber (an epoxidized isoprene rubber). Examples of a method of epoxidizing a natural rubber include, for example, a chlorohydrin method, a direct oxidation method, a hydrogen peroxide method, an alkyl hydroperoxide method, a peracid method, and the like (JP H04-26617 A, JP H02-110182 A, GB 2113692 A, etc.). Examples of the peracid method include, for example, a method of reacting a natural rubber with an organic peracid such as peracetic acid, performic acid, and the like, etc. In addition, by adjusting an amount of the organic peracid and a reaction time, epoxidized natural rubbers with various epoxidation rates can be prepared. A natural rubber to be epoxidized is not particularly limited, and those commonly used in the tire industry can be used, such as, for example, SIR20, RSS#3, TSR20, a deproteinized natural rubber (DPNR), an ultra pure natural rubber, and the like.

An epoxidation rate of an epoxidized isoprene-based rubber is preferably 10 mol% or more, more preferably 15 mol% or more, further preferably 20 mol% or more. On the other hand, the epoxidation rate is preferably 75 mol% or less, more preferably 60 mol% or less, further preferably 50 mol% or less, particularly preferably 40 mol% or less, from the viewpoint of fracture characteristics. Besides, the epoxidation rate is a value measured by the above-described measuring method.

A content of the epoxidized isoprene-based rubber in the rubber component is preferably greater than 5% by mass, more preferably 6% by mass or more, further preferably 8% by mass or more, particularly preferably 10% by mass or more. On the other hand, the content of the epoxidized isoprene-based rubber in the rubber component is preferably 30% by mass or less, more preferably 27% by mass or less, further preferably 24% by mass or less, further preferably 21% by mass or less, further preferably 18% by mass or less, particularly preferably 15% by mass or less. When the content of the epoxidized isoprene-based rubber is within the above-described ranges, it is considered that a compatibility with an SBR can be improved, a phase-separated structure can be formed, and stress can be easily relaxed between phases.

The total content N of the isoprene-based rubbers in the rubber component is preferably greater than 5% by mass, more preferably 6% by mass or more, further preferably 8% by mass or more, particularly preferably 10% by mass or more. On the other hand, the total content N of the isoprene-based rubbers in the rubber component is preferably 30% by mass or less, more preferably 27% by mass or less, further preferably 24% by mass or less, further preferably 21% by mass or less, further preferably 18% by mass or less, particularly preferably 15% by mass or less. Besides, a "total content of isoprene-based rubbers" is a sum of a content of an epoxidized isoprene-based rubber and a content of isoprene-based rubbers other than the epoxidized isoprene-based rubber.

(SBR)

An SBR is not particularly limited, examples of which include, for example, an unmodified solution-polymerized SBR (S-SBR) and an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

A styrene content of an SBR can be, for example, appropriately selected so that a total styrene amount in the rubber component satisfies ranges described below, but it is preferably 40% by mass or less, more preferably 36% by mass or less, further preferably 32% by mass or less, particularly preferably 28% by mass or less. Moreover, the styrene content of the SBR is preferably 5% by mass or more, more preferably 7% by mass or more, further preferably 10% by mass or more, further preferably 13% by mass or more, particularly preferably 16% by mass or more. Besides, the styrene content of the SBR is measured by the above-described measuring method.

A vinyl content of an SBR is preferably greater than 10 mol%, more preferably greater than 15 mol%, further preferably greater than 20 mol%. Moreover, the vinyl content of the SBR is preferably less than 70 mol%, more preferably less than 67 mol%, further preferably less than 64 mol%. Besides, in the present specification, the vinyl content of the SBR is measured by the above-described measuring method.

A content S of an SBR in the rubber component is preferably greater than 30% by mass, more preferably 40% by mass or more, further preferably 50% by mass or more, further preferably 60% by mass or more, particularly preferably 70% by mass or more, from the viewpoint of the effects of the present invention. On the other hand, the content S of the SBR in the rubber component is preferably 99% by mass or less, more preferably 94% by mass or less, further preferably 92% by mass or less, particularly preferably 90% by mass or less.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

The rare-earth-based BR includes those which are synthesized using a rare-earth element-based catalyst and have a vinyl content of preferably less than 1.8 mol%, more preferably less than 1.6 mol%, further preferably 1.5 mol% or less and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

As the modified BR, a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the end of which is further bonded by tin-carbon bond (tin-modified BR), and the like. Moreover, the modified BR may be either non-hydrogenated or hydrogenated.

A weight-average molecular weight (Mw) of a BR is preferably greater than 200,000, more preferably greater than 300,000, further preferably greater than 400,000, from the viewpoint of abrasion resistance. Moreover, it is preferably less than 2,000,000, more preferably less than 1,000,000, further preferably less than 800,000, from the viewpoints of cross-linking uniformity, etc. Besides, the Mw can be calculated by the above-described method.

A content of a BR when compounded in the rubber component is, but not particularly limited to, preferably 1% by mass or more, more preferably 3% by mass or more, further preferably 5% by mass or more, particularly preferably 7% by mass or more. On the other hand, the content of the BR when compounded in the rubber component is preferably 35% by mass or less, more preferably 25% by mass or less, further preferably 18% by mass or less, further preferably 15% by mass or less, particularly preferably 12% by mass or less.

(Total styrene amount)

A total styrene amount in the rubber component is preferably less than 30% by mass, more preferably less than 28% by mass, further preferably less than 26% by mass, particularly preferably less than 24% by mass, from the viewpoint of the effects of the present invention. Moreover, the total styrene amount in the rubber component is preferably greater than 5% by mass, more preferably greater than 7% by mass, further preferably greater than 9% by mass, particularly preferably greater than 11% by mass, from the viewpoint of the effects of the present invention.

(Other rubber components)

The rubber component may comprise rubber components other than diene-based rubbers (non-diene-based rubbers) as long as they do not affect the effects of the present invention. As the non-diene-based rubbers, rubber components commonly used in the tire industry can be used, examples of which include, for example, a butyl-based rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination. Moreover, besides the above-described rubber components, the rubber component may or may not comprise a known thermoplastic elastomer.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained by, for example, decomposing a rubber product such as a tire and the like under high temperature and pressure, by decomposing it by microwaves, or by extruding it after mechanically pulverizing it.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a polybutadiene rubber synthesized from a biomass-derived butadiene, an aromatic vinyl/-butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard body provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC as, currently, under a normal condition, it often does not reach 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment comprises a filler as an essential component. The filler preferably comprises silica, and more preferably comprises carbon black and silica. Moreover, the filler may be a filler consisting of carbon black and silica.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. These silica may be used alone, or two or more thereof may be used in combination.

As silica relating to the present embodiment, silica made from a biomass material is appropriately used, from the viewpoint of building a sustainable society. Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than $100 \text{ m}^2/\text{g}$, more preferably greater than $120 \text{ m}^2/\text{g}$, further preferably greater than $150 \text{ m}^2/\text{g}$, from the viewpoint of reinforcing property. Moreover, it is preferably less than $300 \text{ m}^2/\text{g}$, more preferably less than $280 \text{ m}^2/\text{g}$, further preferably less than $250 \text{ m}^2/\text{g}$, from the viewpoints of heat generation and processability. Besides, the $N_2SA$ of silica is measured by the above-described measuring method.

An average primary particle size of silica is preferably 24 nm or less, more preferably 22 nm or less, further preferably 20 nm or less, particularly preferably 18 nm or less. A lower limit value of the average primary particle size is, but not particularly limited to, preferably 1 nm or more, more preferably 3 nm or more, further preferably 5 nm or more, from the viewpoint of dispersibility of silica. Besides, the average primary particle size of silica is measured by the above-described measuring method.

A content X of silica based on 100 parts by mass of the rubber component is preferably 45 parts by mass or more, more preferably 65 parts by mass or more, further preferably 85 parts by mass or more, further preferably 95 parts by mass or more, particularly preferably 105 parts by mass or more, from the viewpoint of the effects of the present invention. Moreover, X is preferably 140 parts by mass or less, more preferably 130 parts by mass or less, further preferably 120 parts by mass or less.

(X/S)

X/S is preferably greater than 1.0, more preferably greater than 1.1, further preferably greater than 1.2, from the viewpoint of the effects of the present invention. Moreover, an upper limit value of X/S is, but not particularly limited to, preferably less than 4.0, more preferably less than 3.0, further preferably less than 2.5, particularly preferably less than 2.0.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. These carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis of an organic material at 550 to 800°C, excluding oxygen, or by vacuum pyrolysis at a relatively low temperature ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably 30 $m^2/g$ or more, more preferably 50 $m^2/g$ or more, further preferably 70 $m^2/g$ or more, particularly preferably 90 $m^2/g$ or more, from the viewpoint of reinforcing property. Moreover, it is preferably 200 $m^2/g$ or less, more preferably 150 $m^2/g$ or less, further preferably 120 $m^2/g$ or less, from the viewpoints of fuel efficiency and processability.

An average primary particle size of carbon black is preferably 36 nm or less, more preferably 32 nm or less, further preferably 28 nm or less, particularly preferably 24 nm or less. A lower limit of the average primary particle size is, but not particularly limited to, preferably 5 nm or more, more preferably 8 nm or more, further preferably 10 nm or more. Besides, the average primary particle size of carbon black is measured by the above-described measuring method.

A content of carbon black when compounded based on 100 parts by mass of the rubber component is preferably 1 part by mass or more, more preferably 3 parts by mass or more, further preferably 5 parts by mass or more, from the viewpoint of reinforcing property. Moreover, it is preferably less than 30 parts by mass, more preferably less than 20 parts by mass, further preferably less than 15 parts by mass, particularly preferably less than 10 parts by mass, from the viewpoint of suppressing heat generation.

(Other fillers)

The filler may include other fillers besides silica and carbon black. Other fillers are not particularly limited, and those conventionally and commonly used in the tire industry can be compounded, such as, for example, aluminum hydroxide, calcium carbonate, alumina, clay, talc, and the like.

A total content of fillers based on 100 parts by mass of the rubber component is preferably 50 parts by mass or more, more preferably 70 parts by mass or more, further preferably 90 parts by mass or more, particularly preferably 100 parts by mass or more, from the viewpoint of the effects of the present invention. Moreover, the total content of fillers based on 100 parts by mass of the rubber component is preferably 140 parts by mass or less, more preferably 130 parts by mass or less, further preferably 120 parts by mass or less, from the viewpoint of the effects of the present invention.

A content of silica in 100% by mass of the filler is preferably greater than 50% by mass, more preferably greater than 60% by mass, further preferably greater than 70% by mass, further preferably greater than 80% by mass, particularly preferably greater than 90% by mass. Moreover, the content of silica in 100% by mass of the filler is preferably less than 100% by mass, more preferably less than 99% by mass, further preferably less than 97% by mass.

Besides, in a case where the filler consists of carbon black and silica, if the total content of the fillers and a content of any one of carbon black or silica are determined as described above, the remaining content of the other is accordingly determined.

(Silane coupling agent)

Silica is preferably used in combination with a silane coupling agent. Examples of the silane coupling agent include, but not particularly limited to, for example, sulfide-based silane coupling agents such as bis(3-triethoxysilylpropyl) disulfide, bis(3-triethoxysilylpropyl)tetrasulfide, and the like; mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxy, and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. These silane coupling agents may be used alone, or two or more thereof may be used in combination.

A content of a silane coupling agent based on 100 parts by mass of silica is preferably 1.0 part by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Plasticizer>

The rubber composition relating to the present embodiment comprises a plasticizer as an essential component. The plasticizer is a material that imparts plasticity to the rubber component, and has a concept that includes both a plasticizer in a liquid state at 25°C and a plasticizer that is solid at 25°C. Examples of the plasticizer include, a resin component, oil, a liquid rubber, an ester-based plasticizer, and the like. These plasticizers may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizers. These plasticizers may be used alone, or two or more thereof may be used in combination.

(Resin component)

A resin component is not particularly limited as long as it is a resin component commonly used in the tire industry, examples of which include, for example, an adhesive resin such as a dicyclopentadiene-based resin, an aromatic vinyl resin, a C9-based resin, a C5-based resin, a C5/C9-based resin, a terpene-based resin, a rosin-based resin, a phenol-based resin, and the like. Among them, a dicyclopentadiene-based resin and/or an aromatic vinyl resin are preferable, and a dicyclopentadiene-based resin is more preferable. These resin components may be used alone, or two or more thereof may be used in combination.

<<Dicyclopentadiene-based resin>>

A "dicyclopentadiene-based resin" refers to resin comprising dicyclopentadiene (DCPD) as a monomer and may be one obtained by hydrogenating or modifying it. Examples of the dicyclopentadiene-based resin include, for example, a DCPD/C9 resin obtained by copolymerizing dicyclopentadiene with the C9 fraction, and the like. Among them, a DCPD/C9 resin is preferable. As the DCPD resin, for example, those commercially available from Exxon Mobil Corporation, ENEOS Corporation, Zeon Corporation, Maruzen Petrochemical Co., Ltd., etc. can be used. These dicyclopentadiene-based resins may be used alone, or two or more thereof may be used in combination.

<<Aromatic vinyl-based resin>>

An "aromatic vinyl-based resin" refers to resin comprising at least one aromatic vinyl compound selected from the group consisting of styrene, $\alpha$-methylstyrene, vinyltoluene, p-chlorostyrene, and the like as a monomer component having the largest content, preferably 50 mol% or more, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used. These aromatic vinyl-based resins may be used alone, or two or more thereof may be used in combination.

<<C9-based resin>>

A "C9-based resin" refers to resin obtained by polymerizing C9 fractions and may be resin obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, it may be one obtained by hydrogenating or modifying them. Examples of the C9 fraction include, for example, a petroleum fraction having 8 to 10 carbon atoms, which is at least one selected from the group consisting of vinyltoluene, alkylstyrene, coumarone, indene, methylindene, dicyclopentadiene, and the like. Specific examples of the C9-based resin include, for example, a coumarone-indene resin, a coumarone resin, an indene resin, and the like. These C9-based resins may be used alone, or two or more thereof may be used in combination.

<<C5-based resin>>

A "C5-based resin" refers to resin obtained by polymerizing a C5 fraction other than dicyclopentadiene, and may be one obtained by hydrogenating or modifying them. Examples of the C5 fraction other than dicyclopentadiene include, for example, a petroleum fraction having 4 to 5 carbon atoms, which is at least one selected from the group consisting of cyclopentadiene, isoprene, pentane, isopentane, neopentane, pentene, pentadiene, and the like. These C5-based resins may be used alone, or two or more thereof may be used in combination.

<<C5/C9-based resin>>

A "C5/C9-based resin" refers to resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used. These C5/C9-based resins may be used alone, or two or more thereof may be used in combination.

<<Terpene-based resin>>

The terpene-based resin refers to a resin comprising a terpene compound of at least one selected from the group consisting of such as $\alpha$-pinene, $\beta$-pinene, limonene, dipentene, and the like as a monomer component having the largest content, preferably 50 mol% or more, and may be one obtained by hydrogenating or modifying them. Specific examples of the terpene-based resin include, for example, a polyterpene resin only comprising one or more of the terpene compounds as monomer components; an aromatic-modified terpene resin comprising the terpene compound and an aromatic compound as monomer components; a terpene phenolic resin comprising the terpene compound and a phenol-based compound as monomer components; and the like. Examples of the aromatic compound used as a monomer component for the aromatic-modified terpene resin include, for example, at least one selected from the group consisting of styrene, $\alpha$-methylstyrene, vinyltoluene, divinyltoluene, and the like. Examples of the phenol-based compound used as a monomer component for the terpene phenolic resin include, for example, at least one selected from the group consisting of phenol, bisphenol A, cresol, xylenol, and the like. These terpene-based resins may be used alone, or two or more thereof may be used in combination.

<<Rosin-based resin>>

The rosin-based resin refers to resin comprising a rosin acid compound of at least one selected from the group consisting of abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying it by hydrogenation, disproportionation, dimerization, esterification, etc., and the like. These rosin-based resins may be used alone, or two or more thereof may be used in combination.

<<Phenol-based resin>>

A phenol-based resin refers to a resin comprising a phenolic compound such as phenol, cresol, and the like as a monomer component having the largest content, preferably 50 mol% or more. Examples of the phenol-based resin include, but not particularly limited to, a phenol formaldehyde resin, an alkylphenol formaldehyde resin, an alkylphenol acetylene resin, an oil-modified phenol formaldehyde resin, and the like. These phenol-based resins may be used alone, or two or more thereof may be used in combination.

A softening point of a resin component is preferably higher than 50°C, more preferably higher than 60°C, further preferably higher than 70°C, particularly preferably higher than 80°C, from the viewpoint of the effects of the present invention. Moreover, it is preferably lower than 150°C, more preferably lower than 140°C, further preferably lower than 130°C, from the viewpoints of processability and improvement of dispersibility of a rubber component with a filler. Besides, the softening point of the resin component is measured by the above-described measuring method.

A content of a resin component when compounded based on 100 parts by mass of the rubber component is preferably 5 parts by mass or more, more preferably 10 parts by mass or more, further preferably 15 parts by mass or more, particularly preferably 20 parts by mass or more, from the viewpoint of the effects of the present invention. Moreover, it is preferably 50 parts by mass or less, more preferably 45 parts by mass or less, further preferably 40 parts by mass or less, particularly preferably 35 parts by mass or less, from the viewpoint of suppressing heat generation.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR at room temperature, and signals near 5.26 ppm, near 4.28 ppm, and near 4.15 ppm are observed under a condition that a signal of tetramethylsilane (TMS) is set to 0.00 ppm. The signals are presumed to be derived from hydrogen atoms bonded to carbon atoms adjacent to oxygen atoms of an ester group. Besides, "near" in this paragraph shall be a range of ±0.10 ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, genome editing, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, a whale oil, an oleyl alcohol that may be derived therefrom, or the like.

A content of oil when compounded based on 100 parts by mass of the rubber component is preferably greater than 20 parts by mass, more preferably greater than 25 parts by mass, further preferably greater than 30 parts by mass, particularly preferably greater than 35 parts by mass, from the viewpoint of the effects of the present invention. Moreover, it is preferably less than 90 parts by mass, more preferably less than 80 parts by mass, further preferably less than 70 parts by mass, particularly preferably less than 60 parts by mass, from the viewpoint of abrasion resistance. Besides, the content of oil also includes an amount of oil contained in an oil-extended rubber.

(Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. The liquid rubber may be used alone, or two or more thereof may be used in combination.

(Ester-based plasticizer)

Examples of the ester-based plasticizer include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizer may be used alone, or two or more thereof may be used in combination.

A total content P of plasticizers based on 100 parts by mass of the rubber component is preferably greater than 20 parts by mass, more preferably greater than 30 parts by mass, further preferably greater than 40 parts by mass, further preferably greater than 50 parts by mass. particularly preferably greater than 60 parts by mass, from the viewpoint of the effects of the present invention. Moreover, P is preferably less than 100 parts by mass, more preferably less than 90 parts by mass, further preferably less than 80 parts by mass, from the viewpoint of suppressing heat generation.

(P/N)

P/N is preferably greater than 2.0, more preferably greater than 2.5, further preferably greater than 3.0, further preferably greater than 3.5, particularly preferably greater than 4.0, from the viewpoint of the effects of the present invention. Moreover, an upper limit value of P/N is, but not particularly limited to, preferably less than 9.0, more preferably less than 8.0, further preferably less than 7.5.

(Other compounding agents)

The rubber composition relating to the present embodiment can appropriately comprise compounding agents conventionally and generally used in the tire industry, for example, a vulcanized rubber particle, processing aid, wax, an antioxidant, stearic acid, zinc oxide, a vulcanizing agent, a vulcanization accelerator, and the like, in addition to the above-described components.

(Vulcanized rubber particle)

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle.

As commercially available products of vulcanized rubbers, for example, products from Lehigh Technologies, Muraoka Rubber Reclaiming Co., Ltd., etc. can be used.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. These processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.5 parts by mass, more preferably greater than 1.0 parts by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of preventing whitening of a tire due to bloom.

(Antioxidant)

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and polymers of N-(1,3-dimethylbutyl)-N'-phenyl-p-phenylenediamine and 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 1.0 parts by mass, further preferably greater than 1.4 parts by mass, from the viewpoint of ozone crack resistance of a rubber. Moreover, it is preferably less than 2.5 parts by mass, more preferably less than 2.0 parts by mass, further preferably less than 1.8 parts by mass, from the viewpoints of abrasion resistance and wet grip performance.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent may be used alone, or two or more thereof may be used in combination.

A content of sulfur when compounded based on 100 parts by mass of the rubber component is preferably greater than 0.5 parts by mass, more preferably greater than 0.8 parts by mass, further preferably greater than 1.2 parts by mass, from the viewpoint of securing a sufficient vulcanization reaction. Moreover, it is preferably less than 5.0 parts by mass, more preferably less than 4.0 parts by mass, further preferably less than 3.0 parts by mass, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

(Vulcanization accelerator)

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a thiazole-based vulcanization accelerator, a guanidine-based vulcanization accelerator, and a thiuram-based vulcanization accelerator are preferable, from the viewpoint that desired effects can be obtained more appropriately. The vulcanization accelerator may be used alone, or two or more thereof may be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like.

Examples of the thiuram-based vulcanization accelerator include, for example, tetrakis(2-ethylhexyl)thiuram disulfide (TOT-N), tetramethylthiuram disulfide (TMTD), tetraethylthiuram disulfide, tetramethylthium monosulfide (TMTM), dipentamethylene thiuram disulfide, dipentamethylene thiuram tetrasulfide, and the like.

A content of a vulcanization accelerator when compounded based on 100 parts by mass of the rubber component is preferably 0.5 parts by mass or more, more preferably 1.0 parts by mass or more, further preferably 1.5 parts by mass or more, from the viewpoint of securing a sufficient vulcanization rate. Moreover, the content of the vulcanization accelerator is preferably 10 parts by mass or less, more preferably 5.0 parts by mass or less, from the viewpoint of suppressing blooming.

In the present specification, various materials comprising carbon atoms (for example, a rubber, oil, a resin component, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production of rubber composition and tire]

The rubber composition relating to the present embodiment can be produced by a known method. For example, it can be produced by kneading each of the above-described components using a rubber kneading apparatus such as an open roll, a closed type kneader (Bunbury mixer, kneader, etc.), and the like. The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire relating to the present embodiment comprising the tire member composed of the above-described rubber composition can be produced by a usual method. That is, the tire can be produced by extruding an unvulcanized rubber composition prepared by compounding each of the above-described components for a rubber component as necessary into a corresponding tire member, attaching the tire member together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire relating to the present embodiment can be used for any applications, regardless of whether it is a pneumatic tire or a non-pneumatic tire, and can be used as a tire for a passenger car, a tire for a large passenger car, a tire for a large SUV, a racing tire, a motorcycle tire, a heavy-duty tire, or a run flat tire. Besides, the tire for a passenger car is a tire on the premise that it is mounted on a car running on four wheels and refers to one having a maximum load capacity of less than 1400 kg. Moreover, the heavy-duty tire refers to a tire with a maximum load capacity of 1400 kg or more. Moreover, in the present specification, the tire can be used as an all-season tire, a summer tire, or a winter tire such as a studless tire and the like.

EXAMPLES

Examples considered to be preferable in implementation (Examples) are shown below, though the scope of the present invention is not limited to Examples. Considering a tire comprising a tread part obtained according to the compounding in Table 1 using various chemicals shown below, results, which are calculated based on the following evaluation methods, are shown in Table 1.

Various chemicals used in Examples and Comparative examples are collectively shown below.

SBR: SPRINTAN SLR4630 manufactured by Synthos (S-SBR, styrene content: 25% by mass, vinyl content: 63 mol%, comprising 37.5 parts by mass of an extending oil content based on 100 parts by mass of a rubber solid content)
BR: Ubepol BR (Registered Trademark) 150B manufactured by UBE Corporation (unmodified BR, cis content: 97 mol%, Mw: 440,000)
NR: TSR20
ENR: EPOXYPRENE 25 manufactured by Muang Mai Guthrie Public Company Limited (epoxidized natural rubber, epoxidation rate: $25\pm2$ mol%)
Carbon black: DIABLACK I manufactured by Mitsubishi Chemical Corporation (N220, $N_2SA$: 114 $m^2/g$, average primary particle size: 22 nm)

Silica: K185 manufactured by Wilmar International Ltd. (amorphous silica purified from rice husks)

Silane coupling agent: Si69 manufactured by Evonik Industries AG (bis(3-triethoxysilylpropyl)tetrasulfide)

Oil: VivaTec 500 manufactured by H&R Group (TDAE oil)

Resin component 1: T-REZ PR801 manufactured by ENEOS Corporation (hydrogenated DCPD/C9 resin, softening point: 91°C)

Resin component 2: Sylvatraxx (Registered Trademark) 4401 manufactured by Kraton Corporation (copolymer of α-methylstyrene and styrene, softening point: 85°C)

Wax: SUNNOC N manufactured by Ouchi Shinko Chemical Industry Co., Ltd. (paraffin wax)

Antioxidant: Antigen 6C manufactured by Sumitomo Chemical Co., Ltd. (N-(1,3-dimethylbutyl)-N'-phenyl-p-phenylenediamine)

Stearic acid: Bead stearic acid "CAMELLIA" manufactured by NOF CORPORATION

Zinc oxide: Zinc oxide No. 2 manufactured by Mitsui Mining & Smelting Co., Ltd.

Sulfur: Powdered sulfur manufactured by Karuizawa Sulfur Co, Ltd.

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

Vulcanization accelerator 3: TBzTD manufactured by Performance Additives (tetrabenzyl thiuram disulfide)

(Examples and Comparative examples)

According to the compounding formulations shown in Table 1, using a 1.7 L closed Banbury mixer, all chemicals other than sulfur and vulcanization accelerators are kneaded until a temperature reaches a discharge temperature at 150°C to 160°C for 1 to 10 minutes to obtain a kneaded product. Next, using a twin-screw open roll, sulfur and vulcanization accelerators are added to the obtained kneaded product, and the mixture is kneaded for 4 minutes until the temperature reaches 105°C to obtain an unvulcanized rubber composition. The obtained unvulcanized rubber composition is molded into a shape of a tread part, and attached together with other tire members, preparing an unvulcanized tire, followed by press-vulcanized for 35 minutes under a condition at 150°C to obtain each test tire (size: 195/65R15) described in Table 1.

<Steering stability>

Each test tire is mounted on each of four wheels of an FF passenger vehicle with a displacement of 2000 cc, the vehicle is made to run on a test course with a dry asphalt road surface, and handling characteristics is evaluated based on each feeling of running straight, changing lanes, and accelerating/decelerating when running by a test driver at 100 km/h. The evaluation is performed using an integer value of 1 to 5 points to calculate a total score by 20 test drivers based on evaluation criteria that the higher the score is, the better the handling characteristics is. A total score of the control tire (Comparative example 1) is converted into a reference value (100), and the evaluation result for each test tire is indicated as an index in proportion to the total score.

<Abrasion resistance>

For each vulcanized rubber test piece produced by being cut out with 20 mm in length × 4 mm in width × 1 mm in thickness from a tread part of each test tire so that a tire circumferential direction becomes a long side, using an LAT tester (Laboratory Abrasion and Skid Tester), a volume loss of each test piece is measured under a condition of a load of 100N, a speed of 20 km/h, and a slip angle of 6°, and abrasion resistance of each tire is indicated as an index by the following equation. The results show that the larger the index is, the better the abrasion resistance is.

(Abrasion resistance index) = (volume loss in Comparative example 1) / (volume loss of each test piece) × 100

<Overall performance>

A total value of steering stability and abrasion resistance as described above is shown as an overall performance index.

Table 1

| | Example | | | | Comparative example | | | |
|---|---|---|---|---|---|---|---|---|
| | 1 | 2 | 3 | 4 | 1 | 2 | 3 | 4 |
| Compounding amount (parts by mass) | | | | | | | | |
| SBR | 96.25 | 96.25 | 96.25 | 123.75 | 110 | 96.25 | 96.25 | 96.25 |
| (Oil content) | (26.25) | (26.25) | (26.25) | (33.75) | (30) | (26.25) | (26.25) | (26.25) |
| BR | 15 | 15 | 15 | - | 20 | 10 | 10 | 10 |
| NR | - | - | - | - | - | 20 | 20 | 20 |
| ENR | 15 | 15 | 15 | 10 | - | - | - | - |
| Carbon black | 5 | 5 | 5 | 5 | 5 | 5 | 5 | 5 |
| Silica | 115 | 115 | 115 | 115 | 90 | 90 | 115 | 115 |
| Silane coupling agent | 9.2 | 9.2 | 9.2 | 9.2 | 7.2 | 7.2 | 9.2 | 9.2 |
| Oil | 20 | 10 | 10 | 7 | 5 | 5 | 15 | 15 |
| Resin component 1 | 20 | 30 | 30 | 30 | 15 | 15 | 15 | - |
| Resin component 2 | - | - | - | - | - | - | - | 15 |
| Wax | 2.0 | 2.0 | 2.0 | 2.0 | 2.0 | 2.0 | 2.0 | 2.0 |
| Antioxidant | 3.0 | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 | 2.0 |
| Sulfur | 1.0 | 1.0 | 1.0 | 1.0 | 1.2 | 1.2 | 1.2 | 1.2 |
| Vulcanization accelerator 1 | 2.0 | 2.0 | 2.0 | 2.0 | 2.0 | 2.0 | 2.0 | 2.0 |
| Vulcanization accelerator 2 | 2.5 | 2.5 | 2.5 | 2.5 | 2.5 | 2.5 | 2.5 | 2.5 |
| Vulcanization accelerator 3 | 0.5 | 0.5 | 0.5 | 0.5 | 0.5 | 0.5 | 0.5 | 0.5 |
| Total styrene amount (% by mass) | 17.5 | 17.5 | 17.5 | 22.5 | 20.0 | 17.5 | 17.5 | 17.5 |
| Thickness t of tread part (mm) | 8.0 | 8.0 | 7.0 | 7.0 | 8.0 | 8.0 | 8.0 | 8.0 |
| Total content N of isoprene-based rubber (% by mass) | 15 | 15 | 15 | 10 | 0 | 20 | 20 | 20 |
| Content S of SBR (% by mass) | 70 | 70 | 70 | 90 | 80 | 70 | 70 | 70 |
| Content X of silica (% by mass) | 115 | 115 | 115 | 115 | 90 | 90 | 115 | 115 |
| Total content P of plasticizer (parts by mass) | 66.25 | 66.25 | 66.25 | 70.75 | 50 | 46.25 | 56.25 | 56.25 |
| N/t | 1.9 | 1.9 | 2.1 | 1.4 | 0 | 2.5 | 2.5 | 2.5 |
| P/N | 4.4 | 4.4 | 4.4 | 7.1 | - | 2.3 | 2.8 | 2.8 |
| X/S | 1.6 | 1.6 | 1.6 | 1.3 | 1.1 | 1.3 | 1.6 | 1.6 |
| Index | | | | | | | | |
| Steering stability | 110 | 110 | 115 | 117 | 100 | 100 | 110 | 110 |
| Abrasion resistance | 110 | 112 | 115 | 115 | 100 | 102 | 96 | 94 |
| Overall performance | 220 | 222 | 230 | 232 | 200 | 202 | 206 | 204 |

REFERENCE SIGNS LIST

1. Tread part
2. Belt
3. Band
21. Bead core
23. Rim cushion
24. Clinch
31. Sidewall
32. Inner liner
33. Carcass
CL. Tire equator
t. Thickness of tire member

**Claims**

1. A tire comprising a tire member composed of a rubber composition,

   the rubber composition comprising a rubber component, a filler, and a plasticizer,
   the rubber component comprising an isoprene-based rubber and a styrene-butadiene rubber,
   the isoprene-based rubber comprising an epoxidized isoprene-based rubber,
   wherein N/t is less than 2.2, preferably greater than 0.5 and less than 2.2, where N represents a total content, in % by mass, of isoprene-based rubbers in the rubber component and t represents a thickness, in mm, of the tire member.

2. The tire of claim 1, wherein N is greater than 5, preferably 6 or more and 30 or less.

3. The tire of claim 1 or 2, wherein the rubber component comprises greater than 30% by mass, preferably 40% by mass or more, more preferably 50% by mass or more and 94% by mass or less of a styrene-butadiene rubber.

4. The tire of any one of claims 1 to 3, wherein a total styrene amount in the rubber component is less than 30% by mass, preferably less than 28% by mass, more preferably greater than 5% by mass and less than 26% by mass.

5. The tire of any one of claims 1 to 4, wherein the plasticizer comprises a dicyclopentadiene-based resin.

6. The tire of any one of claims 1 to 5, wherein P/N is greater than 2.0, preferably greater than 3.0, preferably greater than 3.5 and less than 9.0, where P represents a total content, in parts by mass, of plasticizers based on 100 parts by mass of the rubber component.

7. The tire of any one of claims 1 to 6, wherein the filler comprises silica.

8. The tire of claim 7, wherein X/S is greater than 1.0, preferably greater than 1.1, preferably greater than 1.2 and less than 3.0, where X represents a content, in parts by mass, of silica based on 100 parts by mass of the rubber component and S represents a content, in % by mass, of the styrene-butadiene rubber in the rubber component.

9. The tire of claim 7 or 8, wherein the silica is silica made from a biomass material.

10. The tire of any one of claims 1 to 9, wherein the tire member is at least one selected from the group consisting of a tread part, a sidewall, and a clinch.

# FIG. 1

Europäisches
Patentamt

European
Patent Office

Office européen
des brevets

## EUROPEAN SEARCH REPORT

**Application Number**

EP 25 17 0099

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 254 462 B1 (HANKOOK TIRE & TECH CO LTD [KR]) 24 May 2021 (2021-05-24) <br> * example 1 * <br> ----- | 1-5,7-10 | INV. <br> B60C1/00 <br> C08L9/00 |
| X | US 7 803 866 B2 (TOYO TIRE & RUBBER CO [JP]) 28 September 2010 (2010-09-28) <br> * examples 1-6 * <br> ----- | 1-10 | |
| X | EP 2 377 892 B1 (SUMITOMO RUBBER IND [JP]) 14 May 2014 (2014-05-14) <br> * example 31 * <br> ----- | 1-4,7-10 | |

|  |
|---|
| **TECHNICAL FIELDS SEARCHED (IPC)** |
| B60C <br> C09J <br> C08L |

The present search report has been drawn up for all claims

| Place of search | Date of completion of the search | Examiner |
|---|---|---|
| Munich | 12 August 2025 | Ritter, Nicola |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                   
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 0099

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2025

| Patent document cited in search report | Publication date | Patent family member(s) | Publication date |
|---|---|---|---|
| KR 102254462 B1 | 24-05-2021 | NONE | |
| US 7803866 B2 | 28-09-2010 | DE 102008051556 A1 | 28-05-2009 |
| | | JP 2009102507 A | 14-05-2009 |
| | | US 2009105403 A1 | 23-04-2009 |
| EP 2377892 B1 | 14-05-2014 | BR PI0922386 A2 | 26-01-2016 |
| | | CN 102245644 A | 16-11-2011 |
| | | EP 2377892 A1 | 19-10-2011 |
| | | EP 2666815 A1 | 27-11-2013 |
| | | KR 20110103946 A | 21-09-2011 |
| | | MY 159145 A | 15-12-2016 |
| | | RU 2011120479 A | 20-01-2013 |
| | | US 2011253285 A1 | 20-10-2011 |
| | | WO 2010071106 A1 | 24-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021025006 A
- JP H0426617 A
- JP H02110182 A
- GB 2113692 A
- JP 2009002594 A
- EP 3427975 A
- JP 6856781 B
- EP 3173251 A

**Non-patent literature cited in the description**

- *Akita Prefectural University Web Journal B*, 2019, vol. 6, 216-222
- *Rubber Chemistry and Technology*, 2012, vol. 85 (3), 408-449
- A comparison of surface morphology and chemistry of pyrolytic carbon blacks with commercial carbon blacks. *Powder Technology*, 2005, vol. 160, 190-193